# EUROPÄISCHE PATENTANMELDUNG

(11) **EP 0 775 926 A1**
(43) Veröffentlichungstag der Anmeldung: **28.05.1997**
(21) Anmeldenummer: 96118662.4
(22) Anmeldetag: 21.11.1996
(51) Int. Cl.: G02B 21/36

(54) **Belichtungssteuerung für die fotografische Aufnahme eines Mikroskopbildes**

(30) Priorität: 23.11.1995 DE 19543585; 14.11.1996 DE 19646962
(71) Anmelder: Carl Zeiss Jena GmbH, 07740 Jena (DE)
(72) Erfinder: Götz, Burkhard, 07747 Jena (DE); Kohle, Dirk, Dipl.-Biol., 89522 Heidenheim (DE); Knoblich, Johannes, Dr.-Ing., 07747 Jena (DE); Tandler, Hans, Dr.-Ing., 07745 Jena (DE); Faltermeier, Bernd, Dr., 73431 Aalen (DE)
(74) Vertreter: Hampe, Holger

(57) **Zusammenfassung**

Belichtungssteuerung für die fotografische Aufnahme eines Mikroskopbildes, mit einer zweidimensionalen fotoelektrischen Empfängeranordnung zur Erfassung der Bildhelligkeit des Mikroskopbildes,
die Bestandteil eines am Standard- Fotoausgang eines Mikroskopes ansetzbaren Kamerasystems ist,
wobei diese Empfängeranordnung eine Schnittstelle zur Übertragung der durch die Empfängeranordnung erfaßten Bildinformation vom mikroskopischen Objekt zu einer Betrachtungseinheit aufweist und die Betrachtungseinheit mit ersten Eingabemitteln zur manuellen Auswahl mindestens eines beliebigen Bildbereiches auf der Empfängeranordnung verbunden ist, dessen Intensitätswert das Steuersignal für die Belichtungszeit der fotografischen Aufnahme bildet.
Zur Erfassung der Bildhelligkeit des Mikroskopbildes, vorzugsweise zur Belichtungssteuerung, wird bei einem vorwählhar großer Bildbereich bezüglich seiner enthaltenen Helligkeitswerte die Häufigkeit des Auftretens bestimmter Helligkeitswerte von vorwählbar großen Bildbereichen diesen Bildbereichen zugeordnet .

## Beschreibung

Die in der Mikrofotografie bei Mikroskopen bekannten Spotmessungen unterschiedlicher Meßflächen (z. B. 3 %, 1 %, 0.1 % der gesamten Kleinbild - Formatfläche) dienen der exakten, auf ein Objektdetail bezogenen Belichtungsmessung mittels Sensoren , insbesondere bei mikroskopischen Objekten hoher Dynamik , wie z. B. Fluoreszenz -, Dunkelfeld - und Pol - Präparaten.
Dazu wird das zu messende Objektdetail entweder in die durch eine Einstellmarke gekennzeichnete Sehfeldmitte von Mikroskopokular oder Mikroskopkamera - Einstellfernrohr gerückt (durch Objektzentrierung am Mikroskoptisch) oder durch eine verschiebbare Meßblende eingefangen.
Beide Methoden setzen eine exakte Zentrierung von Objektdetail (Spot - Meßfläche) und Einstellmarke zu dem die Belichtungszeit messenden Sensor voraus.
Diese Zentrierung garantiert jedoch - auch wenn sie vom Anwender exakt ausgeführt wurde - nicht in jedem Fall eine eindeutige Spotpositionierung und damit die richtige Belichtung auf das gewünschte Objektdetail.
Diese Spot - Fehlpositionierung tritt dann auf, wenn durch die Summation der Zentriertoleranzen der einzelnen mechanischen Systemkomponenten - Schnittstellen (Okular und Mikroskop - Okularrohr bzw. Einstellfernrohr und Mikroskopkamera; Fotoausgang Mikroskoptubus und Anschlußadapter für Mikroskopkameras; Fotookular bzw. Projektiv und Anschlußadapter für Mikroskopkameras; Mikroskopkamera und Anschlußadapter Mikroskopkameras) ein systematischer Summenzentrierfehler des Systems Mikroskop - Mikroskopkamera entsteht, der in der Größenordnung des Spot - Durchmessers liegt.

Neben dem vom Anwender nicht beeinflußbaren, systematischen Summenzentrierfehler des Systems Mikroskop - Mikroskopkamera wirkt noch ein subjektiver, zufälliger Zentrier - Einstellfehler, der von den Einstellfertigkeiten des Anwenders, d. h. seiner Fertigkeit, das zu belichtende Objektdetail (Spotposition) tatsächlich in der markierten Meßposition (Strichkreuzmitte der Einstellhilfe, z. B. Okular oder Einstellfernrohr) zu positionieren.

Beide beschriebenen Fehleranteile werden insbesondere beim " 0.1 % - Spot ", d.h. kleinem Spot - Meßverfahren zu einem grundsätzlichen Problem, häufig sind Fehlbelichtungen die Folge.

In DE - A1 3410682 sind in der Bildebene eines Photomikroskopes mehrere photoelektrische Detektoren im Bildbereich in unterschiedlichen Bereichen positioniert, um dem Benutzer Inhomogenitäten der Beleuchtungsstärkeverteilung anzuzeigen.

In DE 3506492 A1 ist eine Mehrfeldmatrix mit steuerbarer Transmission im Strahlengang eines optischen Gerätes angeordnet , die von einem Prozessor felderweise hellgeschaltet wird und der ein Fotoempfänger oder eine Fotoempfängermatrix nachgeordnet ist , wobei die einzelnen gemessenen Helligkeitssignale ausgewertet werden .
Aus den Feldern, die Objektstrukturen enthalten, wird rechnerisch eine optimale Belichtungszeit durch Bestimmung des Verhältnisses der hellgesteuerten Felder zur Gesamtzahl aller Felder ermittelt.

In EP 380904 B1 wird die übliche angesetzte Videokamera an ein Mikroskop durch einen in der primären Bildebene eines Objektives mit einem ultraweitem geebneten Feld und großer numerischer Apertur vorgesehenen zweidimensionalen Halbleiter-Bildempfänger ersetzt, um Echtzeit- Digitalbilder ohne weitere dazwischengeschaltete optische Elemente zu erzeugen.

In der nicht vorveröffentlichten DE 19517476 A1 dient eine an das Mikroskop angesetzte Videokamera zur Ermittlung der Belichtungszeit einer angeschlossenen Photokamera, wobei unterschiedliche Bildbereiche des erzeugten Videobildes zur Belichtungssteuerung herangezogen werden, die vom Betrachter ausgewählt werden.
Die Bestimmung der Belichtungszeit erfolgt durch Mittelwertbildung, wobei stets eine angesetzte Videokamera erforderlich ist.
Beim Ansatz einer Videokamera muß jedoch jeweils das optische System bezüglich der Aufnahmeparameter der jeweiligen Kamera geeicht werden.

Aufgabe der Erfindung ist es, auf einfache und dennoch universell modifizierbare Art eine exakte , zentrierfehlerfreie Zuordnung der einzustellenden Belichtungszeit an das tatsächlich interessierende Objektdetail zu gewährleisten.

Die Aufgabe wird erfindungsgemäß durch die Merkmale der unabhängigen Ansprüche gelöst.
Bevorzugte Weiterbildungen sind Gegenstand der abhängigen Ansprüche.

Wird der auf die CCD - Matrix projizierte, für die Belichtung relevante Bildausschnitt über einen Algorithmus (Computerprogramm) in ein Clusterbildformat in Form eines Intensitäts - Rasterbildes umgerechnet und auf einem Computerbildschirm (oder Laptop- oder Notebookdisplay) als Grauwert- oder Farbrasterbild, auf dem noch die Objektdetails erkennbar sind, zur Darstellung gebracht, kann bei entsprechender Größe des Rasterbildes auf dem Monitor und einer sich damit ergebenden minimalen Einzelclustergröße mit Einzelclusterauflösung das gewünschte Objektdetail auf der Bedienoberfläche angeklickt werden.

Durch geeignete Eingabemittel, gegebenenfalls über eine Maussteuerung direkt auf dem Bildschirm, kann eine Veränderung des auf der Betrachtungseinheit sichtbaren Bildes vorgesehen sein, wobei insbesondere mittels elektronischer Bildverarbeitung jeweils mehrere lichtempfindliche Bereiche der Empfängeranordnung auf der Betrachtungseinheit zu einem wählbar großen Cluster zusammengefaßt werden .
Durch Auswahl mindestens eines Clusters wird dessen aus den Einzelbereichen abgeleiteter, beispielsweise gemittelter Intensitätswert als Steuersignal für die Belichtungszeit eingesetzt.

Durch die Eingabemittel kann vorteilhaft auch eine Veränderung des Bildkontrastes vorgenommen werden, um bestimmte interessierende Bereiche deutlicher hervorzuheben..

Aus den Signalen der lichtempfindlichen Bereiche der Empfängeranordnung werden der Helligkeit entsprechende Werte abgeleitet ,
es erfolgt eine erste Zwischenspeicherung der Helligkeitswerte mindestens eines Teils der einzelnen Bildelemente ,sowie eine zweite Zwischenspeicherung, dieser Helligkeitswerte in zweite Zwischenspeicherelemente, die bestimmten Helligkeitswerten - oder Bereichen entsprechen,
wobei durch Auslesen der zweiten Zwischenspeicherelemente die Häufigkeit auftretender Helligkeitswerte - oder Bereiche ermittelt und angezeigt wird.

Vorteilhaft werden aus den Werten der ersten und / oder zweiten Zwischenspeicherelemente Belichtungszeiten ermittelt und nach ihrem Wert oder Wertebereich gespeichert und angezeigt.

Die erfindungsgemäße Lösung wird im Folgenden anhand der schematischen Darstellungen naher erläutert.
Es zeigen:
Fig.1: Einen optischen Strahlengang für die Mikrofotografie von der Tubuslinse eines Mikroskopes aus in Richtung eines Aufnahmesystems
Fig.2: Ein durch Bildverarbeitung auf einem Monitor dargestelltes Bild betrachteter Objektstrukturen
Fig. 3 : Eine schematische Darstellung der erfindungsgemäßen Belichtungssteuerung.
Fig.4: Ein Monitorbild mit Clusterbild und Häufigkeitsverteilung.
Fig. 5 : Ein Beispiel einer aufgenommenen Gitterstruktur
Fig. 6 : Ein Beispiel eines aufgenommenen Punktes
Fig. 7 und 8: Dreidimensionale Häufigkeitsverteilungen der Helligkeit der Strukturen gemäß Fig. 5 und 6.

Das von einer Tubuslinse 1 eines Mikroskopes geformte Zwischenbild 2 wird in einem Fotostrahlengang ( Fototubus), der einem Strahlteilerelement ST nachgeordnet ist, über ein Fotookular 3 vergrößert
Dem Fotookular 3 ist ein Schwenkspiegel 7 nachgeordnet, wobei bei aus dem Strahlengang ausgeschwenktem Spiegel 7 und geöffnetem Zentralverschluß 4 ein Objektiv 5 ein vergrößertes Zwischenbild 6 in der Filmebene 6 einer nicht dargestellten Aufzeichnungseinheit erzeugt.
Zur Belichtungssteuerung wird der Schwenkspiegel 7 in den Strahlengang eingeschwenkt, wodurch über eine Belichtungsoptik 8 ein Zwischenbild 9 auf einer CCD - Matrix erzeugt wird, die über eine nicht dargestellte Logikschaltung mit einer Auswerteeinheit verbunden ist, zu der ein PC gehört.

Über den Strahlteiler ST und einen Binokulartubus 10 erfolgt die Betrachtung des Zwischenbildes 2 durch das Beobachterauge 11.
Schwenkspiegel 7, Verschluß 4 , Objektiv 5 sowie Fimlebene 6, aber auch Belichtungsoptik 8 und die CCD - Matrix sind hierbei integrierter Bestandteil eines an den Fotoausgang nach dem Fotookular 3 bzw. einem Projektiv, je nach optischem System, ansetzbaren Aufsetzkamerasystems AK, so daß eine gegenseitige Justierung oder Eichung der Einzelelemente oder die beim separaten Ansatz von Videokameras erforderliche Neueichung entfällt.

Nachfolgend erfolgt beispielhaft ein Dimensionierungsbeispiel zur Abschätzung der Clustergröße auf einem PC - Monitor:

Bei Anwendung eines 1/3" - CCD - Chips der Sensorfläche 3.6 x 4.8 mm und einer Pixelanzahl von 500 x 680 Einzelpixeln ist beim Einsatz einer entsprechenden Optik die Abbildung des Kleinbildformates der Größe 2.4 x 3.6 mm = 8.64 mm² auf die Chipoberfläche möglich. Für die Belichtungsmessung wird üblicherweise nur ein Bildausschnitt (meistens nur 30 % der Bildformatfläche) verwendet.

Werden nun beispielsweise 9 x 14 Einzelpixel zu einem Cluster zusammengefaßt, entsteht eine Cluster - Empfängerfläche von 88 x 88 µm. Mit dieser Clustergröße wird eine 0.1 % - ige Spotgröße erreicht und bei Zusammenfassung von z. B. 21 x 21 Clustern (resultierende Empfängerfläche: 3.42 mm²) ergibt sich eine Integralmeßfläche von 44 %.

Bei einem Spot - Meßformat von z. B. 17 x 26 Cluster = 442 Cluster auf der Chipoberfläche, d. h. 442 einzelnen Spot - Positionen, ergibt sich das Clusterbild - Format von 1.5 x 2.3 mm = 3.45 mm².

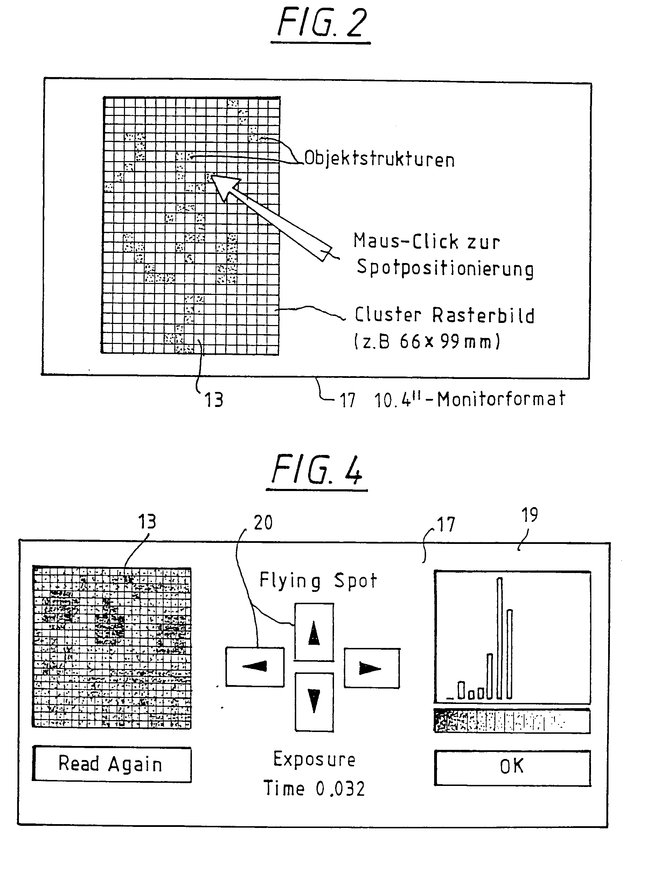

Bei Umrechnung des Clusterbild - Formates auf einen 10.4" - Monitor (über das KB - Gesamtformat von 2.4 x 3.6 mm) mit der wahlweisen Darstellung des Clusterbildes in Hoch - oder Querformat auf dem Monitor ergibt sich ein gerastertes Grauwert - Clusterbild der Größe 66 x 99 mm und der zur Spotmessung anclickbaren Einzelcluster der Größe von 3.8 x 3.8 mm . Dieses Grauwert - Clusterbild ist in Fig. 2 schematisch dargestellt.
Fig. 2 zeigt eine Clusterbilddarstellung auf einem Notebook - Monitor, mit Einzelclustern 13 sowie dargestellten Objektstrukturen unterschiedlicher Helligkeit und einen Mausklick , der auf bestimmte Einzelcluster positioniert werden kann, um anhand der Helligkeit eines Clusters oder einer Clustergruppe die hierfür optimale Belicxhtungszeit zu bestimmen.
Mit der erfindungsgemäßen Lösung des Anclickens von erkennbaren Clusterbild - Objektdetails als ein neuartiges Spot - Meßverfahren ist ein eindeutiger Bezug von dem zu belichtenden Objekt und dem Belichtungssensor gegeben und damit sind die Zentriertoleranzprobleme und damit verbundene Fehlbelichtungen, die bei konventionellen Spotmessungen häufig auftreten können, ausgeschlossen.

Bildverarbeitende Mittel zur Clusterbildung - und Darstellung und damit zur Verfremdung und Kontrastvergrößerung von Objektstrukturen sind bisher im Stand der Technik durch ihre Anwendung beispielsweise bei der Erkennung von Objekten durch Bildaufnahmesysteme von Industrierobotern, bei der verfremdeten Darstellung von Personen im Fernsehen oder auch als PC - Bildschirmschoner bekannt geworden.

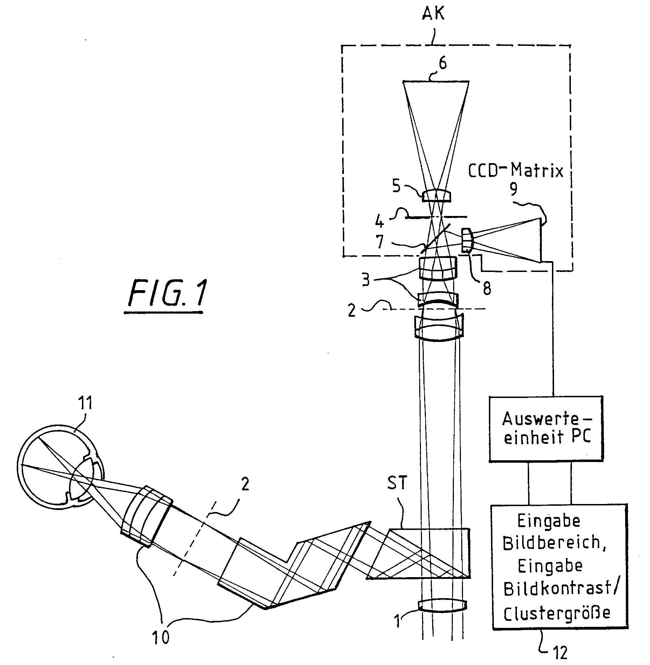

Erfindungsgemäß sind in Fig.1 Eingabemittel 12 vorgesehen, um über den PC die Einstellung der Größe der Einzelcluster ( Bildbereiche) sowie eine Veränderung des Bildkontrastes vornehmen zu können.
Diese Eingabemittel können auch auf dem PC - Bildschirm dargestellt und durch Mausklick einstellbar sein.

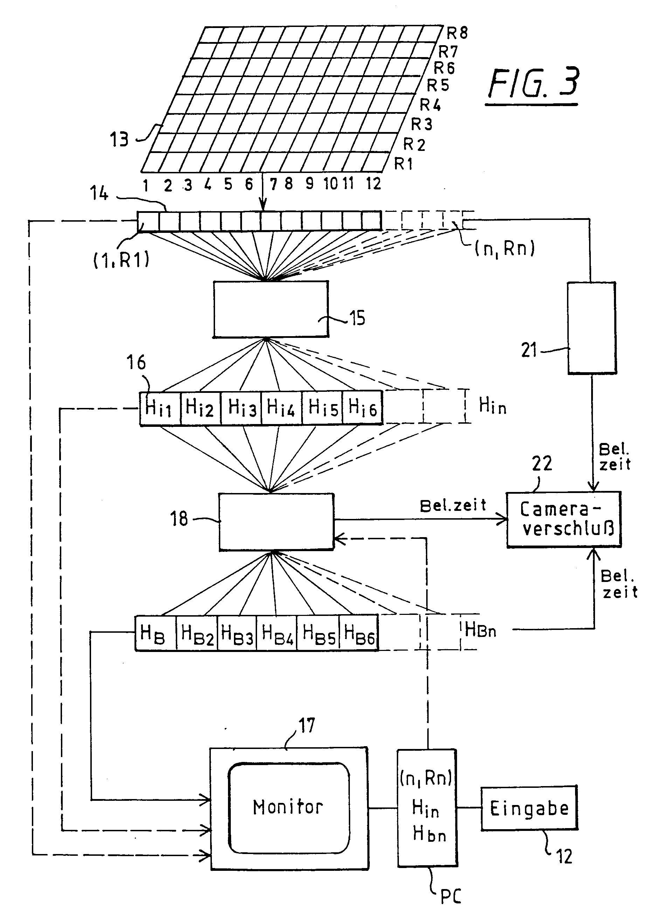

Im folgenden wird anhand der Darstellung in Fig.3 ein vorteilhaftes Verfahren sowie eine Anordnung zur Ermittlung optimaler Belichtungszeiten für die unterschiedlichsten zu fotografierenden Objekte und Präparate beschrieben.

Hierzu sind den auf dem Monitor dargestellten und einzeln oder in Gruppen anwählbaren Bildbereichen oder Clustern 13, die ein Intensitäts - Rasterbild darstellen, wobei jeweils mehrere lichtempfindliche Bereiche der CCD - Matrix gemäß Fig.1 zu jeweis einem Cluster zusammengefaßt sind, jeweis einzelne Zwischenspeicherelemente 14 zur Abspeicherung des Helligkeitswertes, der aus den Einzelhelligkeiten der lichtempfindlichen Bereiche, beispielsweise durch Mittelwertbildung abgeleitet wird ,zugeordnet.
Numeriert man , wie dargestellt, die Einzelcluster zeilenweise mit 1 .... n und spaltenweise mit R1 .... Rn, so wird jedem Einzelcluster 13 der Koordinaten 1,R1 ....n,Rn ein Zwischenspeicherelement 14 zugeordnet, das jeweis die Information über den Helligkeitswert des Einzelclusters als Zahlenwert beinhaltet, dem wiederum ein bestimmter optimaler Belichtungswert entspricht.
Die Werte dieser Zwischenspeicher können nun, wie bereits beschrieben und dargestellt, auf der Betrachtungseinheit 17 als Clusterbild dargestellt werden.
Die Zwischenspeicher 14 werden weiterhin vorteilhaft mittels einer Verarbeitungsstufe 15 der Reihe nach ausgelesen und bezüglich ihres Helligkeitswertes in Zwischenspeicher 16 nach Histogrammklassen Hi1 .. Hin, die bestimmten Helligkeitswerten oder Bereichen entsprechen, eingeordnet und gezählt.
Hiedurch erhält man eine Information über die Häufigkeit des Auftretens bestimmter Helligkeitswerte oder Bereiche der einzelnen Cluster 1,R1 ... n, Rn. Die ermittelte Häufigkeitsverteilung wird auf einem Monitor 17 angezeigt. Mittels einer weiteren Verarbeitungsstufe 18 können aber auch aus den Werten der Helligkeit in den Speichern14, 16 durch Auslesen und Multiplikation mit einem vorbestimmten Faktor k der unter anderem von der Lichtempfindlichkeit des verwendeten Films und den optischen Aufneahmeparametern abhängt, Histogrammklassen der Belichtungszeitwerte der Einzelcluster HB1 ... HBn gebildet und angezeigt werden.

Die Methode der Clusterbildung kann auch vorteilhaft automatisch realisiert werden, indem die Werte des Zwischenspeichers 14 über eine Verarbeitungsstufe 21 in Belichtungszeiten umgerechnet werden und direkt zur Ansteuerung der Belichtungszeit des Verschlusses einer Kamera 22 herangezogen werden, wobei ständig von einem ausgewählten Cluster der aktuelle Helligkeitswert und die zugehörige Belichtungszeit neu bestimmt und eingestellt wird. Bei ein - und demselben Präparat wird durch die eindeutige Zuordnung der Einzelcluster erreicht, daß Veränderungen der Clusterhelligkeit durch ablaufende Vorgänge berücksichtigt werden.
Die Verarbeitungsstufe 18 , die die ermittelten und abgespeicherten Helligkeitswerte verarbeitet, kann auch eine Berechnung der Belichtungszeiten aus den Helligkeitswerten durchführen und die Belichtungszeit eines vorgewählten Clusters direkt zur Ansteuerung auf die Kamera 22 übertragen.
Zu diesem Zweck ist eine gestrichelt dargestellte Rückkopplungsleitung vom PC in Richtung der Stufe 18 vorgesehen.
Auch dieser Ablauf kann automatisch erfolgen, d.h. der aktuelle Belichtungszeitwert für ein Cluster wird immer wieder neu berechnet und dient der Einstellung des Belichtungszeitwertes an der Kamera 22.

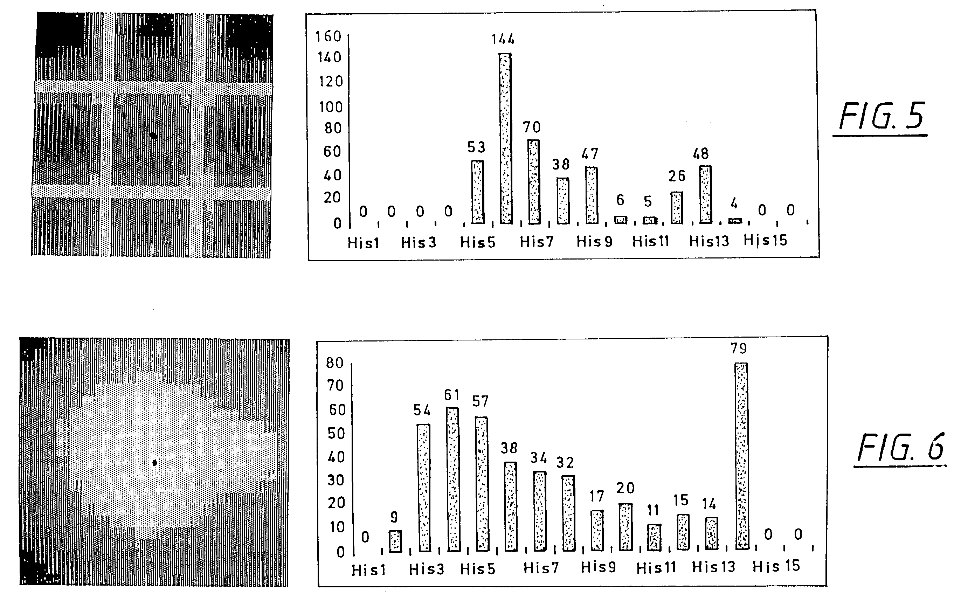

In Fig. 4 ist schematisch ein auf dem Monitor 17 angezeigtes Clusterfeld aus Einzelclustern 13 dargestellt, wobei auf der anderen Seite des Monitors ein Balkendiagramm 19 angezeigt wird, das die Häufigkeit der Einzelhelligkeiten oder die Häufigkeit der hieraus berechneten Belichtungszeiten der Cluster 13 anzeigt.
Gleichfalls Bestandteil des Monitorbildes ist eine mittels der PC - Maus bedienbareEingabevorrichtung zur Veränderung der gewählten Position auf dem Clusterfeld 13 und umschaltbar für die Auswahl einer bestimmten Häufigkeitsklasse auf dem Diagramm 19.

Der Anwender kann hierdurch entweder ein bestimmtes Cluster oder eine Clustergruppe, die die ihn interessierende Objektstruktur beinhaltet , auswählen , wobei dieser die entsprechende Häufigkeitsklasse zugeordnet wird, oder eine Häufigkeitsklasse anwählen und sich alle Einzelcluster anzeigen lassen, deren Helligkeit dieser Klasse entspricht.
Das hat den Vorteil, daß der Anwender überprüfen kann, ob er bei einer für eine bestimmte häufigkeitsklasse optimalen Belichtungszeit auch das ihn interessierende Objektdetail tatsächlich erfaßt, bzw. der Anender kann für weitere fotografische Aufnahmen festlegen, welche Häufigkeitsklassen für die Wahl der richrtigen Belichtungszeit in Frage kommen. Für Fuoreszenzmessungen beispielsweise kann der Anwender auf diese Weise die höchstmögliche Helligkeitsklasse vorwählen oder automatisch vorwählen lassen, oder eine Klasse unterhalb der höchsten Helligkeitsklasse.
Fig. 5 und 6 zeigen beispielhaft die fotografische Aufnahme einer Gitterstruktur bzw. eines Punktes und das jeweils auf dem Monitor angezeigte Clusterfeld als Grauwertverteilung, dem jeweils die Häufigkeitsverteilung als Balkendiagramm zugeordnet ist.
Der Anwender kann bestimmte Häufigkeitsklassen mittels einer PC - Maus anklicken , anhand des Clusterbildes eine Kontrolle vornehmen, ob der ihn interessierende Bildbereich enthalten ist, und mit der dieser Häufigkeitsklasse entsprechenden Belichtungszeit die Aufnahme auslösen.

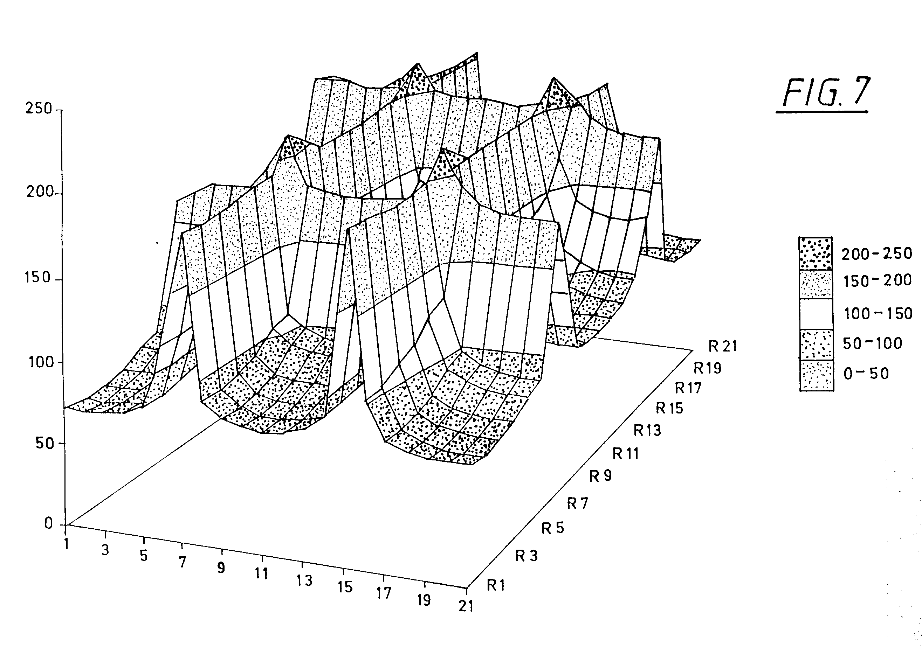

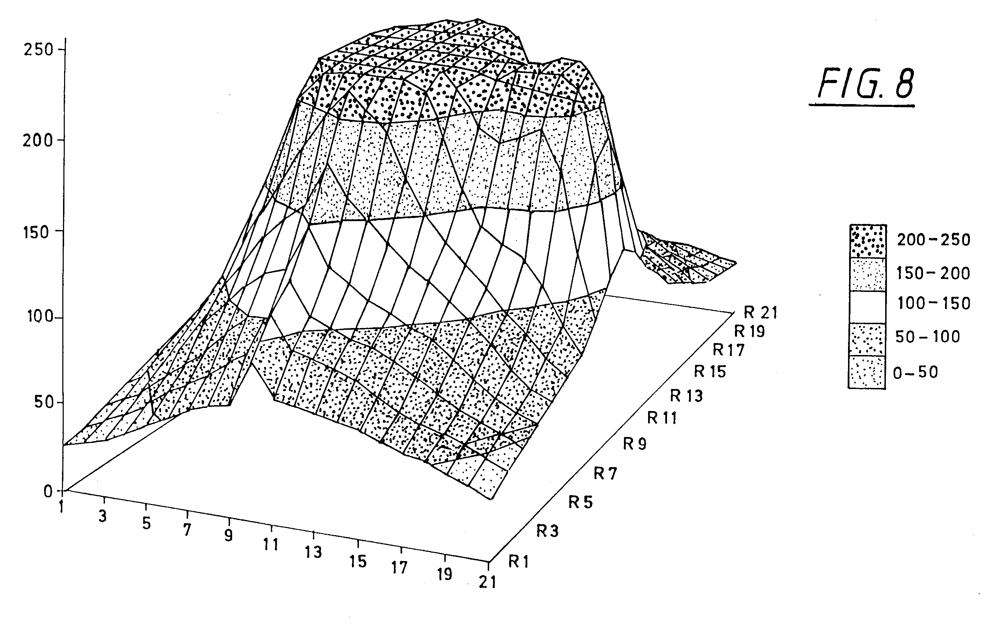

In Fig. 7 und 8 sind die Häufigkeitsverteilungen der Bildhelligkeit oder Belichtungszeit gemäß Fig. 5 und 6 direkt der Objektstruktur zugeordnet, wobei unterschiedliche Häufigkeiten als unterschiedliche Grauwerte oder Farbwerte dargestellt werden.
Hier kann der Anwender direkt am aufzunehmenden Objekt die Belichtungszeit für den ihn interessierenden Bildbereich , auswählen, um genau diesen Bildbereich optimal aufnehmen zu können.

Die Erfindung ist nicht nur an die dargestellte Anwendung zur Belichtungssteuerung gebunden, sondern es sind vorteilhafte Anwendungen denkbar und durch die Erfindung realisierbar, die über Clusterbildung, Erfassung der Bildhelligkeitsverteilung und ihrer Häufigkeitsklassen die automatische Erfassung , Klassifizierung oder Prüfung bestimmter Objekte ermöglicht.

## Patentansprüche

1. Belichtungssteuerung für die fotografische Aufnahme eines Mikroskopbildes,
mit einer zweidimensionalen fotoelektrischen Empfängeranordnung zur Erfassung der Bildhelligkeit des Mikroskopbildes,
die Bestandteil eines am Standard- Fotoausgang eines Mikroskopes ansetzbaren Kamerasystems ist,
wobei diese Empfängeranordnung eine Schnittstelle zur Übertragung der durch die Empfängeranordnung erfaßten Bildinformation vom mikroskopischen Objekt zu einer Betrachtungseinheit aufweist und die Betrachtungseinheit mit ersten Eingabemitteln zur manuellen Auswahl mindestens eines beliebigen Bildbereiches auf der Empfängeranordnung verbunden ist, dessen Intensitätswert das Steuersignal für die Belichtungszeit der fotografischen Aufnahme bildet.

2. Belichtungssteuerung nach Anspruch 1 ,
wobei zweite Eingabemittel zur Veränderung des auf der Betrachtungseinheit sichtbaren Bildes vorgesehen sind.

3. Belichtungssteuerung nach Anspruch 1 oder 2 ,
wobei mittels elektronischer Bildverarbeitung jeweils mehrere lichtempfindliche Bereiche der Empfängeranordnung auf der Betrachtungseinheit zu einem Cluster zusammengefaßt werden und durch Auswahl mindestens eines Clusters dessen Intensitätswert das Steuersignal für die Belichtungszeit bildet.

4. Belichtungssteuerung nach einem der Ansprüche 1 oder 2 ,
wobei durch die zweiten Eingabemittel eine Veränderung des Bildkontrastes vorgenommen wird.

5. Belichtungssteuerung nach einem der Ansprüche 1-4 ,
wobei das mikroskopische Objekt als Grauwert- Rasterbild auf der Betrachtungseinheit angezeigt wird und der Intensitätswert eines Grauwertrasters das Steuersignal für die Belichtungszeit bildet.

6. Belichtungssteuerung nach einem der Ansprüche 1-5 ,
wobei durch Veränderung der Clustergröße die Bildauflösung verändert wird.

7. Belichtungssteuerung nach einem der Ansprüche 1-6
wobei die Empfängeranordnung eine CCD - Matrix ist.

8. Belichtungssteuerung nach einem der Ansprüche 1-7 ,
wobei erste und/ oder zweite Eingabemittel über einen PC - Monitor angesteuert werden.

9. Belichtungssteuerung nach einem der Ansprüche 1 - 8 ,
dadurch gekennzeichnet, daß gleiche Cluster der Empfängeranordnung wiederholt zur Bildung eines Steuersignales für die Belichtungszeit herangezogen werden und jeweils eine Korrektur der Belichtungszeit auf den neuesten Wert erfolgt.

10. Anordnung zur Erfassung der Bildhelligkeit eines Mikroskopbildes, vorzugsweise zur Belichtungssteuerung, wobei mindestens ein Teil des Bildes von einer Empfängeranordnung erfaßt wird , wobei
mittels elektronischer Bildverarbeitung jeweils mehrere lichtempfindliche Bereiche der Empfängeranordnung zu Bildbereichen einstellbarer Größe zusammengefaßt sind, deren Helligkeitswert aus den Helligkeitswerten der einzelnen lichtempfindlichen Bereiche abgeleitet ist und Mittel zur Ermittlung eines Belichtungswertes aus den Helligkeitswerten vorgesehen sind.

11. Anordnung nach Anspruch 10 , enthaltend
Verarbeitungsmittel zur Ableitung eines der Helligkeit entsprechenden Wertes aus den Signalen der lichtempfindlichen Bereiche der Empfängeranordnung
erste Zwischenspeicherelemente zur Speicherung der Helligkeitswerte mindestens eines Teils der einzelnen Bildelemente sowie Verarbeitungsmittel zur Bildung eines Belichtungswertes aus den in den ersten Zwischenspeicherelementen gespeicherten Helligkeitswerte.

12. Anordnung nach Anspruch 10 oder 11 , enthaltend
zweite Zwischenspeicherelemente, die bestimmten Helligkeitswerten - oder Bereichen entsprechen, Verarbeitungsmittel zwischen den ersten und zweiten Zwischenspeicherelementen zum Auslesen der Helligkeitswerte und zur Zuordnung und Abspeicherung der Helligkeitswerte in den zweiten Zwischenspeicherelementen.

13. Anordnung zur Erfassung der Bildhelligkeit eines Mikroskopbildes, vorzugsweise zur Belichtungssteuerung, wobei mindestens ein Teil des Bildes von einer Empfängeranordnung erfaßt wird und eine Schnittstelle zwischen der Empfängeranordnung und einer Betrachtungseinheit , zur Übertragung und Darstellung der durch die Empfängereinheit erfaßten Bildinformation vorgesehen ist, wobei
mittels elektronischer Bildverarbeitung jeweils mehrere lichtempfindliche Bereiche der Empfängeranordnung zu Bildbereichen einstellbarer Größe zusammengefaßt sind, deren Helligkeitswert aus den Helligkeitswerten der einzelnen lichtempfindlichen Bereiche abgeleitet ist.

14. Anordnung nach Anspruch 13 , enthaltend
Verarbeitungsmittel zur Ableitung eines der Helligkeit entsprechenden Wertes aus den Signalen der lichtempfindlichen Bereiche der Empfängeranordnung sowie
erste Zwischenspeicherelemente zur Speicherung der Helligkeitswerte mindestens eines Teils der einzelnen Bildelemente .

15. Anordnung nach Anspruch 13 oder 14 , enthaltend
zweite Zwischenspeicherelemente, die bestimmten Helligkeitswerten - oder Bereichen entsprechen, Verarbeitungsmittel zwischen den ersten und zweiten Zwischenspeicherelementen zum Auslesen der Helligkeitswerte und zur Zuordnung und Abspeicherung der Helligkeitswerte in den zweiten Zwischenspeicherelementen,
Verarbeitungsmittel zum Auslesen der zweiten Zwischenspeicherelemente und zur Anzeige der Häufigkeit auftretender Helligkeitswerte - oder Bereiche.

16. Anordnung nach Anspruch 15 , enthaltend
Verarbeitungsmittel zur Berechnung der jeweiligen Belichtungszeiten aus den Werten der ersten und / oder zweiten Zwischenspeicherelemente.

17. Anordnung nach einem der Ansprüche 13 - 16 , enthaltend
dritte Zwischenspeicherelemente zur Speicherung der berechneten Belichtungswerte nach ihrem Wert oder Wertebereichen

18. Anordnung nach einem der Ansprüche 13 - 17 , enthaltend
Mittel zur Auswahl mindestens eines Bildbereiches auf der Betrachtungseinheit

19. Anordnung nach Anspruch 18 , wobei
erste Mittel zur Auswahl mindestens eines Bildbereiches auf dem Bildschirm selbst angeordnet und durch Mausklick oder Touchscreen ansteuerbar sind

20. Anordnung nach einem der Ansprüche 14 - 19 , enthaltend
zweite Mittel zur Auswahl mindestens einer Häufigkeit auftretender Helligkeitswerte auf der Betrachtungseinheit

21. Anordnung nach einem der Ansprüche 18 - 20 , wobei
erste und zweite Mittel zur Auswahl gleichzeitig auf der Betrachtungseinheit angeordnet sind.

22. Verfahren zur Erfassung der Bildhelligkeit eines Mikroskopbildes, vorzugsweise zur Belichtungssteuerung, wobei mindestens ein Teil des Bildes von einer Empfängeranordnung erfaßt wird und über eine Schnittstelle zwischen der Empfängeranordnung auf eine Betrachtungseinheit übertragen wird, auf der Betrachtungseinheit die durch die Empfängereinheit erfaßte Bildinformation dargestellt wird mittels elektronischer Bildverarbeitung jeweils mehrere lichtempfindliche Bereiche der Empfängeranordnung zu Bildbereichen einstellbarer Größe zusammengefaßt werden, deren Helligkeitswerte aus den Helligkeitswerten der einzelnen lichtempfindlichen Bereiche abgeleitet werden.

23. Verfahren nach Anspruch 22 ,
wobei aus den Signalen der lichtempfindlichen Bereiche der Empfängeranordnung der Helligkeit entsprechende Werte abgeleitet werden,
eine erste Zwischenspeicherung der Helligkeitswerte mindestens eines Teils der einzelnen Bildelemente erfolgt,
eine zweite Zwischenspeicherung, dieser Helligkeitswerte in zweite Zwischenspeicherelemente, die bestimmten Helligkeitswerten - oder Bereichen entsprechen,erfolgt durch Auslesen der zweiten Zwischenspeicherelemente die Häufigkeit auftretender Helligkeitswerte - oder Bereiche ermittelt und angezeigt wird.

24. Verfahren nach Anspruch 23 , wobei aus den Werten der ersten und / oder zweiten Zwischenspeicherelemente Belichtungszeiten ermittelt und nach ihrem Wert oder Wertebereich gespeichert werden

25. Verfahren zur Erfassung der Bildhelligkeit eines Mikroskopbildes, vorzugsweise zur Belichtungssteuerung, wobei ein vorwählbar großer Bildbereich bezüglich seiner enthaltenen Helligkeitswerte der Häufigkeit des Auftretens dieser Helligkeitswerte in Bezug auf andere Bildbereiche zugeordnet wird.

26. Verfahren zur Erfassung der Bildhelligkeit eines Mikroskopbildes, vorzugsweise zur Belichtungssteuerung, wobei die Häufigkeit des Auftretens bestimmter Helligkeitswerte von vorwählbar großen Bildbereichen diesen Bildbereichen zugeordnet wird.
